# EUROPEAN PATENT APPLICATION

(11) **EP 1 477 465 A1**
(43) Date of publication of application: **17.11.2004**
(21) Application number: 04291168.5
(22) Date of filing: 06.05.2004
(51) Int. Cl.: C03C 17/00, C01B 33/24, C01B 33/149

(54) **Substrate with film containing functional particles**

(30) Priority: 14.05.2003 JP 2003136059
(71) Applicant: Nippon Sheet Glass Company, Limited, Osaka-shi, Osaka 541-8559 (JP)
(72) Inventor: Inoguchi, Kazuyuki Nippon Sheet Glass Co. Ltd., Osaka-shi, Osaka 541-8559 (JP); Matsuda, Mizuho Nippon Sheet Glass Co. Ltd., Osaka-shi, Osaka 541-8559 (JP); Tsujino, Toshifumi, Nippon Sheet Glass Co. Ltd., Osaka-shi, Osaka 541-8559 (JP); Yoshida, Mamoru, Nippon Sheet Glass Co. Ltd., Osaka-shi, Osaka 541-8559 (JP)
(74) Representative: Intès, Didier Gérard André

(57) **Abstract**

The invention provides a substrate (1) with a film (5), in which functional particles are dispersed, and whose transparency is maintained even when heated. The film (5) includes a matrix including an alkali metal oxide and a silicon oxide, and functional particles dispersed in the matrix is formed on a substrate. The alkali metal oxide includes at least sodium, and lithium and/or potassium. A mole ratio R₂O/SiO₂ of the alkali metal oxide to the silicon oxide included in the film is in a range of 17/100 to 22/100. The haze ratio of this substrate with a film stays low even when heated.

## Description

The present invention relates to substrates provided with a film to which functional particles have been added in order to achieve a function such as heat-shielding.

JP 2002-29782A discloses a transparent coloring agent for glass, in which sodium silicate, lithium silicate, water, a surface active agent, and an inorganic pigment (functional particles) have been mixed in order to form a glassy film to which functional particles have been added. JP 2000-109722A discloses an aqueous paint composition, to which no functional particles are added, but that includes colloidal silica and a water-soluble silicate serving as a binder. According to JP 2000-109722 A, a solid component weight ratio of the colloidal silica and the water-soluble silicate in the range of 50 : 50 to 99 : 1 is suitable in order to increase the water resistance of the film.

However, according to further investigations by the inventors, when a conventional substrate with glassy film to which functional particles have been added is heated, the transparency of the substrate with glassy film is severely damaged. In particular if a transparent substrate such as a glass sheet is used as the substrate, then the transparency is an important characteristic of the product. And heating of the substrate becomes unavoidable when bending and/or tempering for use as window glass for vehicles.

It is thus an object of the present invention to provide a substrate with a film that maintains transparency and a glassy appearance when heated.

In accordance with the present invention, in a substrate with a film, the film includes a matrix including an alkali metal oxide and a silicon oxide, and functional particles dispersed in the matrix. The alkali metal oxide includes sodium and at least one selected from lithium and potassium. And a mole ratio R₂O/SiO₂ of the alkali metal oxide to the silicon oxide included in the film is in a range of 17/100 to 22/100.

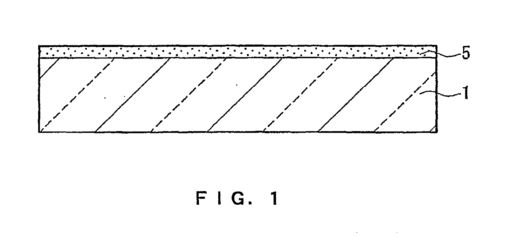

Fig. 1 is a sectional view showing an example of a glass sheet with glassy film according to the present invention.

The inventors found that when the ratio (mole ratio) R₂O/SiO₂ in the matrix is restricted to the limited range of 17/100 to 22/100, then the transparency of the film is easily maintained, even when functional particles are dispersed in it. What contributes to the high transparency of the substrate with film according to the present invention is at least that, when the R₂O/SiO₂ ratio is in the above-noted range, the dispersibility of the functional particles in the matrix increases, or in other words, the functional particles tend not to coagulate. When the R₂O/SiO₂ ratio is outside the above-noted range, then the functional particles are difficult to disperse, resulting in the following problems.

When the R₂O/SiO₂ ratio is too high, the film foams and cracks are formed. As disclosed in JP 2002-29782 A, when the Si component is supplied only from alkali metal silicate, the R₂O/SiO₂ ratio will exceed the above-noted ratio. On the other hand, when the R₂O/SiO₂ ratio is too low, shrinkage of the film in the drying process during the formation of the film becomes large, cracks are formed, and the film tends to become porous. If colloidal silica is added to the extent disclosed in JP 2000-109722 A, the R₂O/SiO₂ ratio becomes lower than the above-noted range. By setting the R₂O/SiO₂ ratio to the above-noted range, it becomes possible to increase the dispersibility of the functional particles while avoiding the effect of foaming and porosity.

According to the present invention, it becomes possible to obtain a substrate with film whose transparency is not compromised when kept at room temperature to 300°C, as commonly applied in the drying step, and even when heated to more than 400°C, or to 550°C to 700°C in order to bend and/or temper the glass sheet.

Transparency can be evaluated from the haze ratio. According to the present invention, a substrate with film can be obtained whose haze ratio is less than 1%, preferably less than 0.6%, even after heating to the above-mentioned temperatures.

In order to disperse a predetermined amount of functional particles for attaining a predetermined functionality, it may be required that the film has a certain thickness. In order to suppress foaming and pores, the R₂O/SiO₂ ratio of the above-noted range is also suitable in view of making the film thicker. According to the present invention, a glassy film with high transparency can be formed, even when the thickness of the film exceeds 300 nm, or even if it is greater than 500 nm. A thick film is disadvantageous with regard to maintaining transparency, but by applying the present invention, it is possible to attain a substrate with glassy film, in which the haze ratio is less than 1%, even when the thickness of the glassy film becomes as thick as noted above.

In the film of the present invention, the alkali metal oxide includes sodium and at least one of lithium and potassium. This improves the moisture resistance and the chemical durability (acid resistance and alkali resistance) of the film. Furthermore, the film preferably includes silicon oxide particles as a part of the silicon oxide.

The ratio (P/M) of the mass of the functional particles (P) to the mass of the matrix (M) should be selected as appropriate with regard to the type of the functional particles and the thickness of the film, but preferably it is 1/99 to 50/50, and even more preferably it is 20/80 to 50/50. If this ratio is too low, then the functionality of the functional particles cannot be attained sufficiently, and if it is too high, then sufficient dispersion of the functional particles becomes difficult, and the strength of the film is lowered.

There is no particular restriction regarding the average particle diameter of the functional particles, but it is preferable that it is not greater than 100 nm, and for example in the range of 10 to 70 nm. For the particle diameter, the primary particle diameter is employed. If the particle diameter is too large, light scattering centers will be formed, and the transparency may be decreased. If, on the other hand, the particle diameter is too low, then it is difficult to maintain the stability of the liquid in which the particles are dispersed. To maintain its stability, it is advantageous to add a dispersing agent, but if too much dispersing agent is used, then the solidity of the film is compromised.

There is no limit to the type of functional particles. As functional particles, suitable particles should be chosen that display the desired functionality, such as heat-shielding (shielding of infrared light), UV light shielding, coloring, and so on. Preferable examples of the functional particles include compound tin oxides such as ITO (tin-doped indium oxide), ATO (antimony-doped tin oxide), and transition metal oxides such as ZnO and Fe₂O₃. More specifically, it is preferable that the functional particles include at least one selected from ITO, ATO, ZnO and Fe₂O₃. ITO and ATO have heat-shielding property. It is further possibility to attain heat-shielding capability with ZnO that has been doped with Ga or the like. ZnO further has UV light absorbing property. Fe₂O₃ has the ability to absorb certain visible wavelength regions, and may serve as a coloring agent.

There is no restriction to the method for forming the film of the present invention, but it is preferable that a liquid composition including a silicate containing an alkali metal, more specifically any alkali metal silicate, for example water glass, is used to form the glassy film. Water glass is a dense aqueous solution of alkali silicate, and generally contains sodium as the alkali metal. Typical water glass can be expressed as Na₂O·nSiO₂, (wherein n is a positive number, for example in the range of 2 to 4). In order to let the film contain two or more kinds of alkali metal, at least one selected from potassium silicate and lithium silicate should be added to the liquid composition together with water glass.

The alkali metal silicate of water glass or the like is a source for both an alkali metal oxide and silicon oxide, but a silicon source, such as colloidal silica or aerosil, preferably colloidal silica may be added to the liquid composition, in order to lower the R₂O/SiO₂ ratio in the glassy film to the above-noted range.

According to another aspect of the present invention, a liquid composition is provided that includes an alkali metal silicate and functional particles, and in which, for solid components and liquid components, the R₂O/SiO₂ mole ratio is within a range of 17/100 to 22/100, when silicon is taken in terms of SiO₂ and alkali metal elements are taken in terms of R₂O. The alkali metal silicate includes Na and at least selected from K and Li.

It is preferable that the liquid composition includes colloidal silica. The silicon oxide particles supplied from the colloidal silica are dissolved gradually from the surface by the alkali components in the liquid composition, but not all should be dissolved and they may remain in form of particles.

The liquid composition further may include a dispersing agent. With a liquid composition in which a dispersing agent is included and the R₂O/SiO₂ ratio is in the above-noted range, the dispersibility of the functional particles is more favorable. In a liquid composition in which the functional particles are dispersed uniformly, it is not necessary to add a surface active agent. Surface active agents may cause coloring of the film. It is preferable that the organic components included in the liquid composition account for less than 1 mass%.

According to yet another aspect of the present invention, a method for manufacturing a substrate with glass film is provided. This method includes a step of preparing the liquid composition, and a step of applying this liquid composition onto a substrate. The applied liquid composition is turned into a glassy film by going through a drying step at which it is heated to the above-noted temperature, and if necessary may be heated to the above-noted temperature at which shaping of the glass sheet becomes possible.

In a preferable embodiment of the substrate with film, the substrate is a glass sheet, and the glass sheet has been subjected to at least one type of processing selected from the group consisting of bending and tempering. Conventionally, if a glass sheet is provided with the functionality stemming from the functional particles, a special resin film in which functional particles are dispersed was added. However, by applying the present invention, a glass sheet with excellent transparency and provided with the functionality due to functional particles can be obtained without adding a resin film.

Fig. 1 is a sectional view showing an example of a substrate with glassy film according to the present invention. A glassy film 5 in which functional particles are dispersed is formed on a substrate 1.

### EXAMPLES

The following is an explanation of methods for evaluating the characteristics of a glass sheet with glassy film fabricated in accordance with the following working examples and comparative examples.

### Film Evaluation Method

■ Transparency: The transparency was determined by measuring the haze ratio using a hazemeter (turbidity meter, HGM-2DP by Suga Test Instruments Co., Ltd.).
■ Optical Characteristics: The optical characteristics were measured with a spectrophotometer (UV-3000PC by Shimadzu Corp.) and were determined by the transmissivity at a wavelength of 1500 nm (T₁₅₀₀), the transmissivity at a wavelength of 850 nm (T₈₅₀), as well as a visible light transmittance (Ya) and a solar energy transmittance (Tg) calculated according to Japanese Industrial Standard R3106. The transmitted color tone was expressed by the color difference formula according to Lab color space (Hunter's color difference formula).
■ Film Thickness: The film thickness of the glassy film was measured using a surface profiler (Alpha-Step 200 by Tencor Instruments).
■ Acid Resistance and Alkali Resistance: The glass sheet with glassy film was immersed for 24 hours in a 0.1 N sulfuric acid and 0.1 N sodium hydroxide, and changes in the brightness of the glass surface and the film surface were measured before and after the immersion with a spectroscopic colorimeter (SE-2000 by Nippon Denshoku Industries Co., Ltd.).
■ Film Hardness: Using a taber abrasion tester (Taber Industries 5150 Abraser), the glass sheet with glassy film was rotated for 1000 abrasion cycles under a load of 500 g, and changes in the optical transmissivity were measured before and after the testing.

### Example 1

4.5 g of a sodium silicate solution (water glass No. 3 by Kishida Chemical Co., Ltd.), 2.5 g of a lithium silicate solution (LSS35 by Nissan Chemical Industries, Ltd.), and 5.0 g of colloidal silica (KE-W10, with 110 nm particle diameter, by Nippon Shokubai Co., Ltd.), were weighed and stirred for 24 hours at 30°C, thus obtaining a liquid composition A. The mole ratio of the solid components and the dissolved components of the liquid composition A in terms of oxide was R₂O/SiO₂ = 22/100, with R₂O = Na₂O + Li₂O = 16+6. It should be noted that the colloidal silica includes 15 mass% silica.

Next, 4.0 g of an aqueous dispersion of ITO particles that provide a heat-shielding property (with 50 nm average particle diameter, by Sumitomo Metal Mining Co., Ltd.) were weighed, and mixed with the total amount of the liquid composition A, thus obtaining a liquid composition B. It should be noted that this dispersion of ITO particles included 20 mass% ITO particles and a nonionic-based dispersing agent that was suitable for uniform dispersion of the ITO particles.

About 0.2 mL of the liquid composition B were dripped onto a rinsed soda-lime glass sheet serving as a substrate (100 × 100 × 3.4 mm, Yₐ = 83%, T_{g} = 63%, T₁₅₀₀ = 59%, T₈₅₀ = 47%, and haze ratio = 0%), spread with a bar coater, dried at room temperature, and dried by heating for 10 min in a drying furnace at 250°C, thus forming the glassy film (heat-shielding film). The film thickness of the resulting film was 500 nm.

As the result of evaluating the optical characteristics of the resulting glass sheet with glassy film, it was found that Yₐ = 72%, T_{g} = 55%, T₁₅₀₀ = 25%, T₈₅₀ = 46%, and haze ratio = 0.7%. This glass sheet with glassy film had a haze ratio of less than 1%, and satisfied Yₐ ≥ 70%, and thus maintained a high transparency and a high transmissivity of visible light. On the other hand, it fulfilled T_{g} ≤ 60% and T₁₅₀₀ ≤ 25%, and thus displayed a high heat-shielding property. Moreover, for light with a wavelength of 850 nm, which is used for automobile billing systems, T₈₅₀ ≥ 30% was maintained.

### Example 2

12.0 g of the aqueous dispersion of ITO particles used for Example 1 were weighed and mixed with the total amount of the liquid composition A, thus obtaining a liquid composition C. Using this liquid composition C, a glass sheet with glassy film was obtained in the same manner as in Example 1. The thickness of the resulting film was 500 nm.

After evaluating the optical characteristics of the resulting glass sheet with glassy film, it was found that Yₐ = 72%, T_{g} = 45%, T₁₅₀₀ = 23%, T₈₅₀ = 46%, and haze ratio = 1.1%. This glass sheet with glassy film had a haze ratio that is slightly higher than in Example 1, but T_{g}≤ 50%, so that it had a higher heat-shielding capability.

### Example 3

9.0 g of a sodium silicate solution (water glass No. 3), 8 g of a potassium silicate solution (Snowtex K by Nissan Chemical Industries, Ltd.), and 9 g of colloidal silica (KE-W10), were weighed and stirred for 24 hours at 30°C, thus obtaining a liquid composition D. The mole ratio of the solid components and the dissolved components of the liquid composition D in terms of oxide was R₂O/SiO₂ = 21/100, with R₂O = Na₂O + Li₂O = 14+7.

3 g of the liquid composition D were mixed with 6g of pure water and 2.5 g of an aqueous dispersion of zinc oxide particles (content ofZnO = 15 mass%, with a ZnO average particle diameter of 30 nm, including a dispersing agent, by C.I. Kasei Co., Ltd.) displaying UV light absorption capability, thus obtaining a liquid composition E. The ratio of the zinc oxide to the total solid portion was 29 mass%.

The liquid composition E was applied by flow coating to the surface of a rinsed UV-absorbing green glass sheet serving as a substrate (100 x 100 × 4 mm, Yₐ = 75%, Tᵤᵥ (ISO) = 9.8%, and Hunter's color values^{:} a=-6.9 and b=3.3), and dried 10 min at 250°C, thus forming a glassy film (UV light absorbing film).

Moreover, this glass sheet with glassy film was heated in a baking furnace until the surface temperature of the glass sheet reached 650°C. The resulting film thickness was 700 nm.

As the result of evaluating the optical characteristics of the resulting glass sheet with glassy film, it was found that Yₐ = 73%, Tᵤᵥ (ISO) = 4.8%, a = - 7.5 and b = 3.7). The resulting glass sheet with glassy film was not warped and had a favorable appearance.

Measuring the acid resistance and the alkali (base) resistance of this glass sheet with glassy film, it was found that changes in brightness could be measured neither on the side of the film nor on the side without the film (glass side). Thus, this glass sheet with glassy film had a high chemical durability. Upon subjecting the glass sheet with glassy film to a taber abrasion test, no change in the optical transmissivity before and after the test could be observed. This glassy film thus had high hardness and excellent abrasion resistance.

### Example 4

2.7 g of a sodium silicate solution (water glass No. 3), 0.7 g of a potassium silicate solution, and 3.9 g of colloidal silica (KE-W10) were weighed and stirred for 24 hours at 30°C, thus obtaining a liquid composition F. The mole ratio of the solid components and the dissolved components of the liquid composition F in terms of oxide was R₂O/SiO₂ = 19/100, with R₂O = Na₂O + Li₂O = 17+2.

7.2 g of an aqueous dispersion of red ocher (red iron oxide; Fe₂O₃) particles serving as a pigment material were weighed, and mixed with the total amount of the liquid composition F, thus obtaining a liquid composition G. It should be noted that the dispersion of red ocher particles (with 60 nm average particle diameter) includes 20 mass% red ocher particles and a nonionic-based dispersing agent that was suitable for uniform dispersion of the red ocher particles.

The liquid composition G was applied with a spin coater to the surface of a rinsed soda-lime glass sheet serving as a substrate (100 × 100 × 3.4 mm), dried at room temperature, and further dried for 10 min at 250°C, thus forming a glassy film (colored film). It should be noted that the spin-coating conditions were 16.6 revolutions per second (=10,000 rpm) for 10 sec.

Moreover, this glass sheet with glassy film was heated in a baking furnace until the surface temperature of the glass sheet reached 650°C. The resulting film thickness was 500 nm.

After evaluating the optical characteristics of the obtained glass sheet with glassy film, it was found that Yₐ = 70%, Tᵤᵥ (ISO) = 7%, a = -2.1 and b = 21.9, and haze ratio = 1.3. The resulting glass sheet with glassy film was not warped and had a favorable appearance.

### Comparative Example 1

0.5 g of a sodium silicate solution (water glass No. 3), and 1.0 g of colloidal silica (PC500 by Nissan Chemical Industries, Ltd., with 20 mass% silica) were weighed and stirred for 24 hours at 30°C, thus obtaining a liquid composition H. The mole ratio of the solid components and the dissolved components of the liquid composition H in terms of oxide was Na₂O/SiO₂ = 15/100.

1.5 g of the liquid composition H and 0.5 g of an aqueous dispersion of ITO particles as used in Example 1 were mixed, thus obtaining a liquid composition I.

The liquid composition I was applied with a spin coater to the surface of a rinsed soda-lime glass sheet serving as a substrate (100 x 100 x 3.4 mm), dried at room temperature, and further dried for 10 min at 250°C, thus forming a glassy film (heat-shielding film). The spin-coating conditions were 16.6 revolutions per second for 10 sec.

Moreover, this glass sheet with glassy film was heated in a baking furnace until the surface temperature of the glass sheet reached 650°C. The resulting film thickness was 500 nm.

The haze ratio of this glass sheet with glassy film was 10%, and transparency was not attained.

### Comparative Example 2

0.6 g of a sodium silicate solution (water glass No. 3), and 2.0 g of colloidal silica (PC500) were weighed and stirred for 24 hours at 30°C, thus obtaining a liquid composition J. The mole ratio of the solid components and the dissolved components of the liquid composition J in terms of oxide was Na₂O/SiO₂ = 10/100. 1.5 g of the liquid composition J and 0.5 g of an aqueous dispersion of ITO particles as used in Example 1 were mixed, thus obtaining a liquid composition K.

Using this liquid composition K, a glassy film was formed on a soda-lime glass sheet (100 × 100 × 3.4 mm) in the same manner as in Comparative Example 1. The thickness of the resulting film was 600 nm.

The haze ratio of this glass sheet with glassy film was 15%, and transparency was not attained.

### Comparative Example 3

3.1 g of a sodium silicate solution (water glass No. 3), 1.0 g sodium silicate powder (by Katayama Chemical Industries Co., Ltd.), 0.7 g of a potassium silicate solution, 3.3 g of colloidal silica (KE-W10) and 1 g of water were weighed and stirred for 24 hours at 30°C, thus obtaining a liquid composition L. Expressed as the mole ratio of the solid components and the dissolved components of the liquid composition L, the solid component (mole ratio) in the matrix liquid composition was R₂O/SiO₂ = 32/100, with R₂O = Na₂O + K₂O = 29+3.

Mixing 1 g of the liquid composition L and 0.5 of an aqueous dispersion of red ocher oxide (Fe₂O₃) as used in Example 4, a liquid composition M was obtained.

Using this liquid composition M, a glassy film was formed on a soda-lime glass sheet (100 × 100 × 3.4 mm) in the same manner as in Comparative Example 1. The thickness of the resulting film was 600 nm.

The resulting film was foamed. The haze ratio of this glass sheet with glassy film was 20%.

In the foregoing examples and comparative examples, not all of the colloidal silica was dissolved in the liquid compositions, and at least a portion was present in the form of particles. Thus, the silica particles were supplied together with the functional particles from the liquid composition to the glassy film.

Moreover, upon subjecting the glassy films to an ultimate analysis with an energy dispersive X-ray detector, it was found that the R₂O/SiO₂ ratio in the glassy films matched the R₂O/SiO₂ ratio in the liquid compositions.

With the present invention, a substrate with a film can be provided, in which functional particles are favorably dispersed, and in which transparency is maintained even when heated.

## Claims

1. A substrate (1) provided with a film (5),
wherein the film (5) comprises a matrix including an alkali metal oxide and a silicon oxide, and functional particles dispersed in the matrix;
wherein the alkali metal oxide comprises sodium and at least one selected from the group consisting of lithium and potassium; and
wherein a mole ratio R₂O/SiO₂ of the alkali metal oxide to the silicon oxide included in the film is in a range of 17/100 to 22/100.

2. The substrate (1) provided with a film (5) as claimed in claim 1,
wherein a ratio of the mass of the functional particles to the mass of the matrix is 1/99 to 50/50.

3. The substrate (1) provided with a film (5) as claimed in claim 1 or claim 2, wherein an average particle diameter of the functional particles is 100 nm or less.

4. The substrate (1) provided with a film (5) as claimed in any one of claims 1 to 3, wherein the functional particles include at least one selected from the group consisting of ITO, ATO, ZnO and Fe₂O₃.

5. The substrate (1) provided with a film (5) as claimed in any one of claims 1 to 4, wherein the substrate is a glass sheet, and the glass sheet has been subjected to at least one type of processing selected from the group consisting of bending and tempering.

6. The substrate (1) provided with a film (5) as claimed in any one of claims 1 to 7, wherein the haze ratio is 1% or less.

7. The substrate (1) provided with a film (5) as claimed in any one of claims 1 to 6, wherein a thickness of the film is greater than 300 nm.

8. A liquid composition comprising an alkali metal silicate and functional particles, wherein the alkali metal silicate comprises sodium and at least one selected from the group consisting of lithium and potassium, and
wherein, when silicon is taken in terms of SiO₂ and alkali metal elements are taken in terms of R₂O, a mole ratio R₂O/SiO₂ in the liquid composition is in a range of 17/100 to 22/100.

9. The liquid composition as claimed in claim 8, wherein the organic components in the liquid composition account for less than 1 mass%.
